# EUROPÄISCHE PATENTANMELDUNG

(11) **EP 1 584 367 A1**
(43) Veröffentlichungstag der Anmeldung: **12.10.2005**
(21) Anmeldenummer: 04008577.1
(22) Anmeldetag: 08.04.2004
(51) Int. Cl.: B01D 53/04, B01D 53/10

(54) **Verfahren und Vorrichtung zum Eintragen von Feststoff**

(71) Anmelder: Austrian Energy & Environment AG, 8074 Raaba/Graz (AT)
(72) Erfinder: Bärnthaler, Klaus, Dipl.-Ing.Dr., 8042 Graz (AT); Wieland, Andrea, Dipl.-Ing., 9422 Maria Rojach (AT); Weiss, Christian, Dipl.-Ing.Dr., 8793 Trofaiach (AT); Aschner, Johannes, Dipl.-Ing., 5440 Golling a.d. Salzach (AT)
(74) Vertreter: VA TECH Patente GmbH & Co

(57) **Zusammenfassung**

Gezeigt wird ein Verfahren bzw. eine Vorrichtung zum Eintragen von Feststoff für die Sorption von Schadstoffen in einen gasdurchströmten Kanal, wobei zumindest ein Teil des Feststoffes rezirkuliert wird. Dabei ist vorgesehen, dass zumindest ein Teil des Feststoffes an mehreren Eintragstellen mechanisch eingetragen wird. Damit wird eine optimale Verteilung der Feststoffteilchen im Gasstrom erreicht.

## Beschreibung

Die gegenständliche Erfindung betrifft ein Verfahren zum Eintragen von Feststoff für die Sorption von Schadstoffen in einen gasdurchströmten Kanal - wobei zumindest ein Teil des Feststoffes rezirkuliert wird - und eine entsprechende Einrichtung.

Derartige Verfahren bzw. Vorrichtungen sind beispielsweise aus der US 4 555 391 bekannt, welche den Einsatz eines solchen Verfahrens für die Trockensorption zeigt.

Häufig ist die Trockensorption eine Prozesstufe von Rauchgasreinigungsanlagen für Kraftwerke und Abfallverbrennungsanlagen. Bei diesem Verfahren werden die Rauchgase durch Reaktion der abzuscheidenden Schadstoffe mit einem, dem Rauchgasstrom trocken zugeführten Sorbens gereinigt. Es erfolgt eine Abscheidung von HCl, HF und SO₂ sowie eine Reduzierung von Dioxinen, Furanen und Schwermetallemissionen durch Adsorption an einem Kalkhydrat/Koks-Gemisch.

Eine Ausführung der Trockensorption stellt der sogenannte Flugstromadsorber (Flugströmer) dar. Die festen Reaktionsprodukte werden in einem Gewebefilter abgeschieden. Das vom Rauchgasstrom mitgeführte Adsorbens und der Reststaub lagern sich an den Filterschläuchen an und bilden den Filterkuchen, der in weiterer Folge die mehrere Millimeter dicke Filterschicht darstellt, in der insbesondere organische Schadstoffe adsorbiert werden. Der abfallende Filterkuchen sammelt sich in den beheizten Bunkerspitzen des Gewebefilters, die durch isolierte und beheizte Austragsschnecken entleert werden.

Der prinzipielle Aufbau einer Trockensorption wird von einem Gewebefilter mit dazugehöriger Feststoffaufgabe für die Sorbentien dargestellt. Wenn besonders hohe Abscheidegrade erreicht werden sollen - das bedeutet Reduktion des Einsatzes von frischem Adsorbens - wird der Filter mit einer Feststoffrezirkulation ausgestattet. Das aus den Filterbunkern mechanisch abgezogene feste und heiße Rezirkulat wird größtenteils wieder vor dem Gewebefilter in den Rauchgasstrom eingebracht. Die Einbringung des Feststoffes in den Rauchgasstrom kann durch einen eigens dafür vorgesehenen Reaktor verwirklicht werden. Um den apparativen Aufwand möglichst gering zu halten, kann man das Frischadsorbens und das Rezirkulat aber auch direkt in den Rauchgaskanal vor Gewebefilter einbringen.

Die Betriebstemperatur des Flugströmers ist stark abhängig von der Anwendung und den im Rauchgas enthaltenen Schadgasen. Bei Müllanwendungen sind sehr hohe Chloridgehalte zu erwarten. Das anfallende Gewebefilterprodukt zeichnet sich durch seine heiklen chemisch-physikalischen Eigenschaften aus: das Material ist äußerst fein und fließfähig und der Anteil von hygroskopischen Verbindungen wie z.B. ZnCl₂, CaCl₂, ist sehr hoch. Die Betriebstemperatur liegt im Bereich von 140°C bis 180°C. Sie ist nach unten hin durch den Kalziumchloridgehalt des anfallenden Produktes beschränkt und nach oben hin durch die sichere Anwendung von Herdofenkoks.

Das bedeutet für das Handling und den Transport des Rezirkulates besondere Herausforderungen: sämtlichen Anlagenteile, die damit in Berührung kommen, müssen isoliert und beheizt werden (Filterbunker, Förderleitungen etc.). Wird dieses Produkt nicht mechanisch gefördert, muss entweder getrocknete Luft - wie in der Dickstromförderung - verwendet werden, oder erhitzte Luft - wie bei der Dünnstromförderung. Wird dies nicht berücksichtigt, nimmt das Material Feuchtigkeit auf und verursacht klebrige Anbackungen. Der Umgang mit diesem Produkt ist daher mit hohen Betriebskosten verbunden.

Ebenso ist aus prozesstechnischen Gründen unbedingt auf eine homogene Feststoffverteilung über den gesamten Rauchgaskanalquerschnitt zu achten, damit eine ausgeglichene Feststoffbeladung der Filterkammern erreicht werden kann; somit ist eine optimale Funktionsweise des Flugströmers gewährleistet. Damit verknüpft sind Abscheidegrade und Betriebskosten (Frischsorbensverbrauch, Druckverlust).

Ein Ziel der Erfindung ist es, eine kostengünstige, baulich einfache und wirksame Anwendung darzustellen, die zur kontinuierlichen Einbringung von staubförmigem Produkt in einen gasdurchströmten Kanal geeignet ist, so dass eine über den Kanalquerschnitt gleichmäßige Verteilung erreicht werden kann.

Die Aufgabe wird durch das Verfahren gemäß Anspruch 1 bzw. die Vorrichtung gemäß Anspruch 12 gelöst.

Die Aufgabe des Feststoffes in den Gaskanal erfolgt mechanisch, in vorteilhafter Weise mit Hilfe von Förderschnecken. Über diese wird mit einer entsprechenden Anzahl von z.B. Fallrohren, die höhen- und längenversetzt im Querschnitt des Gaskanales angeordnet werden, der Feststoff in die Gasströmung gleichmäßig verteilt eingebracht. Damit wird eine optimale Verteilung der Feststoffteilchen im Gasstrom erreicht.

Die Anordnung der Eintragstellen und die Längen der Fallrohre sind abhängig von der Kanalgeometrie und der Geometrie der vor- und nachgelagerten Apparate. Mit Hilfe einer CFD-Simulation wird zunächst geprüft, inwiefern die anlagentechnische Anordnung geeignet ist bzw. noch verändert werden kann, um das Dispergieren des Feststoffes zu unterstützen. Ist eine Geometrie festgesetzt, werden die entsprechenden Positionen der mechanischen Aufgabepunkte rechnerisch ermittelt.

Dies hat den Vorteil, dass die Anzahl der Einbauten gering gehalten wird, was nur zu minimalen Druckverlusten (Betriebskosten) führt. Es sind nur die Aufgaberohre für den Feststoff zu berücksichtigen. Ein Einsatz von Einbauten wie etwa Mischer oder Strömungsbrecher ist nicht notwendig. Dadurch wird die Gefahr von etwaigen Anbackungen im Gaskanal bzw. erhöhte Abrasion an den Einbauten vermieden.

Durch das Merkmal, dass für Frischadsorbens und Rezirkulat unterschiedliche Eintragstellen vorgesehen sind, kann auf die verschiedene Zusammensetzung von Frischadsorbens und Rezirkulat und die damit einhergehenden unterschiedlichen Eigenschaften besser Bedacht genommen werden.

Dadurch, dass der Feststoff durch die Schwerkraft, etwa durch Fallrohre, zur jeweiligen Eintragstelle befördert wird, kann einerseits eine einfache Förderart und andererseits durch die Länge des Fallrohres die geeignete Eintragstelle eingestellt werden.

In der Folge ist es vorteilhaft, wenn das Rezirkulat mittels Förderschnecken aus dem Pufferbehälter in ein oder mehrere Fallrohre gefördert wird.

Weiters kann vorgesehen werden, dass in der Gasströmung ein Drall erzeugt wird, um bereits nach kürzester Wegstrecke eine weitgehende Dispersion des Feststoffes in der Gasströmung zu erreichen.

Es zeigt sich, dass bei einer entsprechenden konstruktiven Gestaltung von Drallblechen vor Feststoffaufgabe ein genügend hoher Drall in der Gasströmung herbeigeführt werden kann, um die Partikeldispersion deutlich zu verbessern. Als wesentliche Mechanismen für die verbesserte Partikeldispersion sind der Einfluss des Zentrifugalfeldes der rotierenden Strömung und die erhöhte Fluidturbulenz zu nennen.

Dabei ist es zur Vermeidung von Anbackungen an den Einrichtungen zur Drallerzeugung sinnvoll, dass der Drall in Strömungsrichtung des Gases vor den Eintragstellen erzeugt wird.

Das erfindungsgemäße Verfahren bzw. die entsprechende Vorrichtung kann zur Trockensorption in Rauchgasreinigungsanlagen, insbesondere für einen Flugstromadsorber, verwendet werden.

Die Erfindung wird im Folgenden anhand von schematischen Figuren beispielhaft erläutert:
Fig. 1 zeigt eine Darstellung der Geometrie einer Anlage zur Trockensorption.
Fig. 2 zeigt das Rauchgaskanalstück der Anlage mit den Einbauten zum Eintragen der
Feststoffe von der Seite und vom Eintritt in den Rauchgaskanal aus.
Fig. 3 zeigt einen Teil des Rauchgaskanalstücks einer weiteren Anlage mit Einbauten zum Eintragen der Feststoffe und Drallblechen.
Fig. 4 zeigt ein Modell der Geometrie zur Strömungsberechnung.

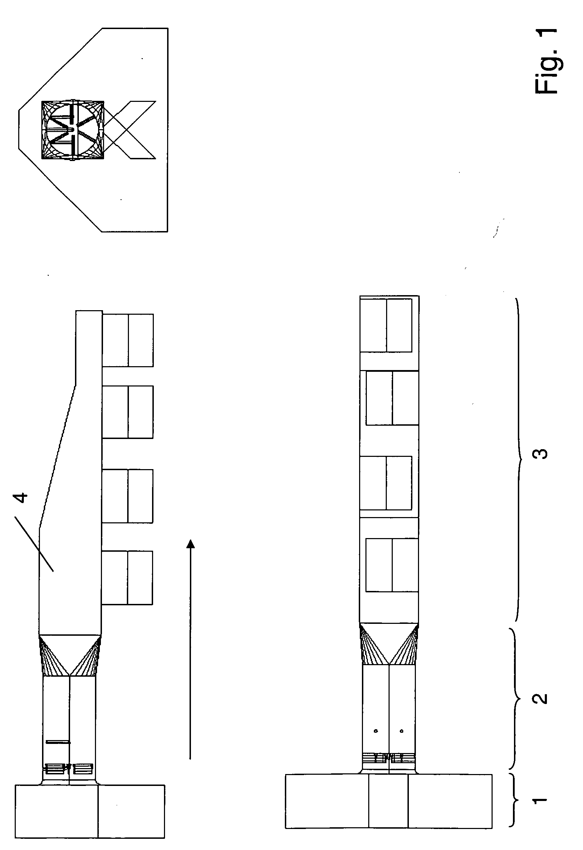

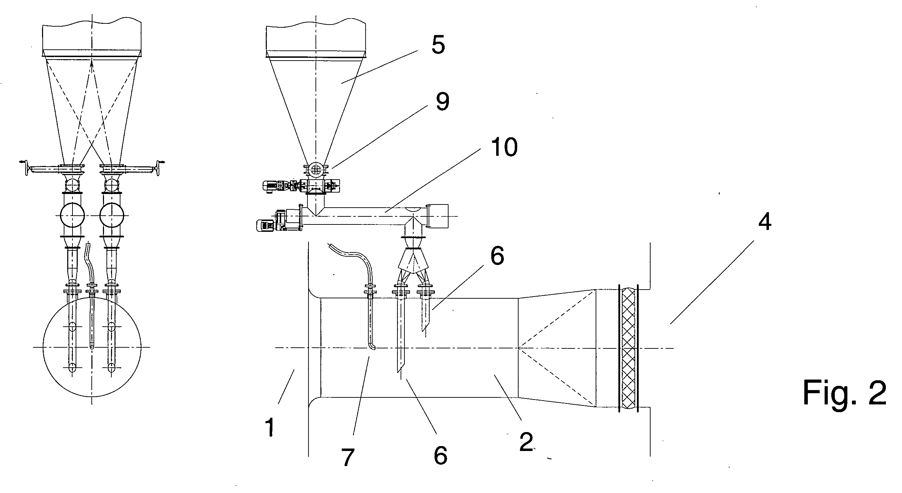

Gemäß Fig. 1 ist die Trockensorption unmittelbar nach dem Heizkessel angeordnet. Das aus dem Economiser vertikal nach oben strömende Rauchgas wird in einem sich trapezförmig verengenden Rauchgaskanal (Economiser-Austritt 1) um 90° in ein horizontales Rohr, den Rauchgaskanal 2, umgelenkt. Darin werden die Sorptionsmittel (in diesem Beispiel Frischsorbent, Rezirkulat u. Herdofenkoks) in das Rauchgas,eingebracht (siehe Fig. 2), wobei die Strömungsrichtung des Rauchgases durch den Pfeil angezeigt wird. Unmittelbar nach der Dosierung der Sorptionsmittel befindet sich der Rohgasverteiler 4 des nachgeschalteten Gewebefilters 3. Der Temperaturbereich des Flugströmers liegt zwischen 160°C bis 180°C. Die Rauchgasgeschwindigkeiten im Kanal an der Aufgabestelles des Feststoffes sind abhängig vom Lastbereich und liegen zwischen 9,5m/s bis 23m/s.

Das aus den nicht dargestellten Filtertrichtern des Gewebefilters 3 abgezogene Rezirkulat wird mittels pneumatischer Dickstromförderung mit auf -40°C getrockneter Luft zu einem beheizten Pufferbehälter 5 oberhalb der Eintragstelle am Rauchgaskanal 2 befördert, siehe Fig. 2. Von dort aus wird das Produkt mittels Förderschnecken (in den Rohren 10 angeordnet) mechanisch über eine festzulegende Anzahl von Fallrohren, in diesem Fall vier Fallrohre 6, in den Rauchgaskanal 2 aufgegeben. Das Frischsorbens und Herdofenkoks wird mittels pneumatischer Dünnstromförderung in ein zentral im Rauchgaskanal 2 mündendes Fallrohr 7 gefördert. Die Mündungen der Fallrohre 6, 7 definieren die Eintragstellen des Sorbens.

Das Gas strömt anschließend mit dem zugegeben Staubprodukt in den als Schlauchfilter ausgebildeten Gewebefilter (Rohgasverteiler 4) ein.

Bei der Trockensorption wird staubförmiges Produkt (siehe Tabelle 1 und 2) aus dem Gewebefilter rezirkuliert. Die typischen Staubeigenschaften sind wie folgt:
- rieselfähig mit guten Agglomerationseigenschaften
- anbackend in Taupunktnähe
- hygroskpisch
- hot-spot-fähig (es kann zur Ausbildung von lokalen Glimmbränden kommen)

**Tabelle 1**

| *Korngrößenverteilung des Gewebefilterproduktes* | | |
|---|---|---|
| **Korngröße** | | **Erwartungs -wert in %** |
| 0,1 - 1,0 | µm | 4 |
| 1,0 - 2,5 | µm | 9 |
| 2,5 - 5,0 | µm | 19 |
| 5,0 - 7,5 | µm | 17 |
| 7,5 - 10 | µm | 15 |
| 10 - 15 | µm | 20 |
| 15 - 20 | µm | 10 |
| 20 - 25 | µm | 4 |
| 25 - 30 | µm | 1 |
| 30 - 40 | µm | 1 |

**Tabelle 2:**

| *Zusammensetzung des Gewebefilterproduktes* | | |
|---|---|---|
| Kalziumoxid CaO | Gew% | <5 |
| Kalziumhydroxid Ca(OH)₂ | Gew% | < 5 |
| Kalziumsulfat CaSO₄x2H₂O | Gew% | <10 |
| Kalziumsulfit CaSO₃ | Gew% | < 10 |
| Karbonate wie CaCO₃ bzw. MgCO₃ | Gew% | 5 - 10 |
| Chloride in signifikanten Mengen wie CaCl₂, ZnCl₂ bzw. Alkalichloride | Gew% | 20 - 45 |
| Inerte | Gew% | < 5 |
| Herdofenkoks | Gew% | 2 - 5 |
| Kesselasche mit Zn-Gehalten > 14Gew% ù | Gew% | 30 - 60 |

Es soll eine möglichst homogene Verteilung der Sorptionsmittel über den Rauchgaskanalquerschnitt erreicht werden, um die für die Abscheidung wesentliche Durchmischung von Sorptionsmittel und Rauchgas sowie eine gleichmäßige Belastung der nachgeschalteten Gewebefilterkammern zu erzielen.

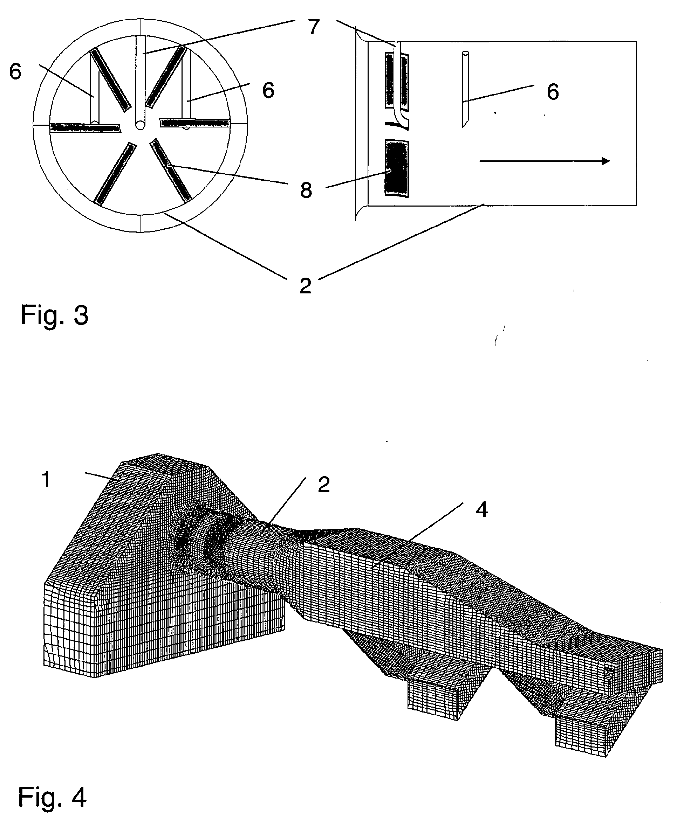

Fig. 3 zeigt, wie bei einer anderen Anordnung mit zwei Fallrohren 6 für Rezirkulat und einem Fallrohr 7 für Frischsorbens und Herdofenkoks vor der Zugabe von Frischsorbens sechs gebogene Drallbleche 8 in jeweils gleichem Abstand voneinander radial angeordnet sind, wobei die Drallbleche bis zur Wand des Rauchgaskanals 2 reichen und im Zentrum des Rauchgaskanals einen Platz für die Mündung des Fallrohres 7 für Frischsorbens und Herdofenkoks freilassen. Die Drallbleche 8 enden in Rauchgasrichtung gesehen, die wieder durch einen Pfeil gekennzeichnet ist, an der Austrittsöffnung des Fallrohres 7.

Fig. 4 zeigt ein Modell der vorliegenden Geometrie zur Berechnung des Strömungsfeldes. Mittels numerischer Strömungsberechnung (Computational Fluid Dynamics - CFD) wurde die Trockensorption hinsichtlich der Kanalgeometrie und der Art und Position der Einbringung der Sorptionsmittel optimiert. Dazu wurde in einem ersten Schritt die einphasige Gasströmung untersucht. Darauf aufbauend erfolgte die Simulation der zweiphasigen Strömung.

Für die Simulationen kam das kommerzielle CFD-Softwarepaket AVL FIRE v7.3 zum Einsatz, das sich für die numerische Untersuchung derartiger ein- und mehrphasiger Strömungsvorgänge sehr gut bewährt hat und in vielen Bereichen seine Anwendung findet. Wesentliche Teilvorgänge der Mehrphasenströmung, wie die Wechselwirkung zwischen Partikeln untereinander bzw. zwischen Staubpartikeln mit der Gasströmung oder mit Einbauten und Kanalwand, erfolgte unter Verwendung der im Programm standardmäßig implementierten Strömungsmodelle (siehe AVL, *Fire Manual Version 7 Spray,* Graz, 2001). Diese experimentell ermittelten Modelle erlauben die Betrachtung der Partikelbewegung nach dem Particle Tracing Verfahren.

Die numerische Lösung der kontinuierlichen Gasströmung im Apparat wurde nach dem Finite-Volumina-Verfahren durchgeführt. Dazu wurde von dem zu untersuchenden Berechnungsgebiet ein dreidimensionales numerisches Netzgittermodell erstellt, das die Unterteilung des gesamten zu betrachtenden Raumvolumens in einzelne Volumselemente festlegt, die als Kontrollvolumina bezeichnet werden (siehe Fig. 4). In jedem dieser Volumselemente werden Modelle von physikalischen und chemischen Vorgängen gelöst. Die zeitliche und räumliche Änderung von Wärme- und Massenflüssen in einem Kontrollvolumen wird über dessen Seitenflächen bilanziert. Je genauer ein untersuchter Strömungsbereich aufgelöst wird - sprich je höher die Anzahl der verwendeten Volumselementegewählt wird - umso genauer wird in der Regel die Berechnung des Strömungsfeldes.

Zuerst wird die einphasige Gasströmung bis zum Erreichen des stationären Strömungszustandes berechnet. In die stationäre Lösung der einphasigen Gasströmung wird anschließend der Feststoff (Sorptionsmittel) an den vorgesehen Aufgabestellen mit definierten Eigenschaften eingebracht. Die Berechnung der Flugbahnen der Feststoffpartikel in der Gasströmung erfolgte nach dem Prinzip von Euler-Lagrange bzw. Discrete Droplet Method (DDM, siehe AVL Spray-Manual sowie diverse Fachliteratur wie: **Crowe C., Sommerfeld M., Tsuji Y.,** *Multiphase flows with droplets and particles,* CRC Press, Boco Raton, 1998). Dabei wird die Bewegung der physikalischen Partikel von einer statistischen Anzahl numerischer Modellpartikel durchgeführt. Jedes Modellpartikel steht für eine bestimmte Anzahl wirklicher Partikel. die die gleichen physikalischen Eigenschaften besitzen (Paketfaktor). Die Bilanzierung der Erhaltungssätze für Masse, Energie und Impuls zwischen den Phasen erfolgt durch Multiplikation mit dem Paketfaktor.

Die Wechselwirkung zwischen Gas und Feststoff erfolgt nach dem Prinzip des Two Way Coupling. Der Partikelbewegung werden zusätzlich noch die Einflüsse aus Kollisionen von Partikel-Wand und Partikel-Partikel überlagert. Nach Erreichen einer quasistationären Lösung für die mehrphasige Strömung während der Sorbenszugabe kann das berechnete Strömungsfeld der Gasphase sowie die Partikelbewegung dreidimensional am Computer untersucht werden.

## Patentansprüche

1. Verfahren zum Eintragen von Feststoff für die Sorption von Schadstoffen in einen gasdurchströmten Kanal, wobei zumindest ein Teil des Feststoffes rezirkuliert wird, **dadurch gekennzeichnet, dass** zumindest ein Teil des Feststoffes an mehreren Eintragstellen mechanisch eingetragen wird.

2. Verfahren nach Anspruch 1, **dadurch gekennzeichnet, dass** die Eintragstellen über den Querschnitt des Kanals verteilt sind.

3. Verfahren nach Anspruch 1 oder 2, **dadurch gekennzeichnet, dass** die Orte der Eintragstellen durch strömungstechnische Berechnungen, insbesondere durch Anwendung der CFD-Simulation, bestimmt werden.

4. Verfahren nach einem der Ansprüche 1 bis 3, **dadurch gekennzeichnet, dass** zumindest zwei Eintragstellen in einer Querschnittsebene des Kanals liegen.

5. Verfahren nach einem der Ansprüche 1 bis 4, **dadurch gekennzeichnet, dass** für Frischadsorbens und Rezirkulat unterschiedliche Eintragstellen vorgesehen sind.

6. Verfahren nach einem der Ansprüche 1 bis 5, **dadurch gekennzeichnet, dass** der Feststoff durch die Schwerkraft, etwa durch Fallrohre, zur jeweiligen Eintragstelle befördert wird.

7. Verfahren nach Anspruch 6, **dadurch gekennzeichnet, dass** das Rezirkulat mittels Förderschnecken aus einem Pufferbehälter in ein oder mehrere Fallrohre gefördert wird.

8. Verfahren nach einem der Ansprüche 1 bis 7, **dadurch gekennzeichnet, dass** in der Gasströmung ein Drall erzeugt wird.

9. Verfahren nach Anspruch 8, **dadurch gekennzeichnet, dass** der Drall in Strömungsrichtung des Gases vor den Eintragstellen erzeugt wird.

10. Verfahren nach einem der Ansprüche 1 bis 9, **dadurch gekennzeichnet, dass** es zur Trockensorption in Rauchgasreinigungsanlagen verwendet wird.

11. Verfahren nach einem der Ansprüche 1 bis 10, **dadurch gekennzeichnet, dass** es für einen Flugstromadsorber verwendet wird.

12. Vorrichtung zum Eintragen von Feststoff für die Sorption von Schadstoffen in einen gasdurchströmten Kanal (2), wobei zumindest ein Teil des Feststoffes rezirkuliert wird, **dadurch gekennzeichnet, dass** mehrere Eintragstellen (6, 7) für das Eintragen von Feststoff vorgesehen sind, zu denen der Feststoff mechanisch förderbar ist.

13. Vorrichtung nach Anspruch 12, **dadurch gekennzeichnet, dass** die Eintragstellen über den Querschnitt des Kanals verteilt sind.

14. Vorrichtung nach einem der Ansprüche 12 oder 13, **dadurch gekennzeichnet, dass** zumindest zwei Eintragstellen in einer Querschnittsebene des Kanals liegen.

15. Vorrichtung nach einem der Ansprüche 12 bis 14, **dadurch gekennzeichnet, dass** für Frischadsorbens und Rezirkulat unterschiedliche Eintragstellen (6, 7) vorgesehen sind.

16. Vorrichtung nach einem der Ansprüche 12 bis 15, **dadurch gekennzeichnet, dass** zumindest eine Einrichtung (6, 7) zur Förderung der Feststoffe durch die Schwerkraft zur jeweiligen Eintragstelle vorgesehen ist, etwa ein Fallrohr.

17. Vorrichtung nach Anspruch 16, **dadurch gekennzeichnet, dass** zumindest eine Förderschnecke zur Förderung des Rezirkulats aus einem Pufferbehälter (5) in ein oder mehrere Fallrohre (6) vorgesehen ist.

18. Vorrichtung nach einem der Ansprüche 12 bis 17, **dadurch gekennzeichnet, dass** eine Einrichtung zur Erzeugung (8) eines Dralls in der Gasströmung vorgesehen ist.

19. Vorrichtung nach Anspruch 18, **dadurch gekennzeichnet, dass** diese Einrichtung in der Gasströmung in Strömungsrichtung des Gases vor den Eintragstellen (6, 7) vorgesehen ist.

20. Verwendung einer Vorrichtung nach einem der Ansprüche 11 bis 18 zur Trockensorption in Rauchgasreinigungsanlagen.

21. Verwendung einer Vorrichtung nach einem der Ansprüche 11 bis 18 in einem Flugstromabsorber.
